# EUROPEAN PATENT APPLICATION

(11) **EP 4 489 463 A1**
(43) Date of publication of application: **08.01.2025**
(21) Application number: 22929303.0
(22) Date of filing: 02.03.2022
(51) Int. Cl.: H04W 24/00

(54) **MEASUREMENT METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/078905
(87) International publication number: WO 2023/164852

(57) **Abstract**

Provided are a measurement method and apparatus, which can be applied in mobile communication technology. The method comprises: a terminal device performing measurement on reference signals, which are carried by first reference signal resources in a first reference signal resource set, so as to obtain first quality information of the first reference signal resources (S201); and determining second quality information of second reference signal resources in a second reference signal resource set according to the first quality information of the first reference signal resources and according to first auxiliary information of the first reference signal resources in the first reference signal resource set and/or second auxiliary information of the second reference signal resources in the second reference signal resource set (S202). Therefore, a terminal device can recover second quality information of second reference signal resources in a second reference signal resource set on the basis of first quality information, which is obtained by means of measurement, of first reference signal resources in a first reference signal resource set, such that the complexity of the terminal device performing measurement can be reduced.

## Description

### TECHNICAL FIELD

The disclosure relates to the field of communication technologies, and in particular, to a measurement method and device.

### BACKGROUND

With the continuous development of AI (artificial intelligence) technology, the application of AI technology is becoming increasingly widespread, and the research on applying AI technology to wireless network air interfaces has also attracted the attention of many scholars. For example, applying AI technology to beam management scenarios can reduce spatial overhead and latency. In beam management scenarios, AI recovery based on specific beam groups not only has good recovery performance, but also reduces the complexity of measurements performed by terminal devices.

### SUMMARY

Embodiments of a first aspect of the present disclosure provide a measurement method. The method is performed by a terminal device, and includes: performing measurement on a reference signal carried by a first reference signal resource in a first reference signal resource set, to obtain first quality information of the first reference signal resource; and determining second quality information of a second reference signal resource in a second reference signal resource set according to the first quality information of the first reference signal resource and according to first auxiliary information of the first reference signal resource in the first reference signal resource set and/or second auxiliary information of the second reference signal resource in the second reference signal resource set.

In this technical solution, the terminal device does not need to measure each second reference signal resource in the second reference signal resource set to obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

Embodiments of a second aspect of the present disclosure provide another measurement method. The method is performed by a network device, and includes: sending first indication information to a terminal device, wherein the first indication information is configured to indicate performing measurement on a reference signal carried by a first reference signal resource in a first reference signal resource set to obtain first quality information of the first reference signal resource; wherein the first quality information of the first reference signal resource is used together with first auxiliary information of the first reference signal resource in the first reference signal resource set and/or second auxiliary information of a second reference signal resource in a second reference signal resource set to determine second quality information of the second reference signal resource in the second reference signal resource set.

Embodiments of a third aspect of the present disclosure provide a measurement device. The measurement device has some or all of the functions of the terminal device in the method described in the first aspect above. For example, the measurement device may have some or all of the functions in the embodiments disclosed herein, or may have the function of separately implementing any of the embodiments disclosed herein. The functions may be implemented by hardware or by executing corresponding software through hardware. The hardware or software includes one or more units or modules corresponding to the above functions.

Embodiments of a fourth aspect of the present disclosure provide another measurement device. The measurement device has some or all of the functions of the terminal device in the method described in the second aspect above. For example, the measurement device may have some or all of the functions in the embodiments disclosed herein, or may have the function of separately implementing any of the embodiments disclosed herein. The functions may be implemented by hardware or by executing corresponding software through hardware. The hardware or software includes one or more units or modules corresponding to the above functions.

Embodiments of a fifth aspect of the present disclosure provide another measurement device. The device includes a processor that executes the method described in the first aspect or the method described in the second aspect when the processor calls a computer program stored in a memory.

Embodiments of a sixth aspect of the present disclosure provide another measurement device. The device includes a processor and a memory. The memory stores a computer program. When the computer program is executed by the processor, the method described in the first aspect or the method described in the second aspect is implemented.

Embodiments of a seventh aspect of the present disclosure provide another measurement device. The device includes a processor and an interface circuit. The interface circuit is configured to receive code instructions and transmit the code instructions to the processor. The processor is configured to run the code instructions, to case the device to implement the method described in the first aspect or the method described in the second aspect.

Embodiments of an eighth aspect of the present disclosure provide a communication system. The system includes the measurement device as described in the third aspect, or the system includes the measurement device as described in the fourth aspect, or the system includes the measurement device as described in the fifth aspect, or the system includes the measurement device as described in the sixth aspect, or the system includes the measurement device as described in the seventh aspect.

Embodiments of a ninth aspect of the present disclosure provide a computer readable storage medium, configured to store instructions to be used by the terminal device, which, when executed, cause the terminal device to implement the method described in the first aspect, or configured to store instructions to be used by the network device, which, when executed, cause the network device to implement the method described in the second aspect.

Embodiments of a tenth aspect of the present disclosure provide a computer program product including a computer program, which when run on a computer, causes the computer to implement the method described in the first aspect, or causes the computer to implement the method described in the second aspect.

Embodiments of an eleventh aspect of the present disclosure provide a chip system. The chip system includes at least one processor and interface for supporting the terminal device to implement the functions involved in the first aspect, or for supporting the network device to implement the functions involved in the second aspect, such as determining or processing at least one of the data and information involved in the above methods. In one possible design, the chip system further includes a memory for storing necessary computer programs and data for the terminal device and the network device. This chip system can be composed of chips or include chips and other discrete components.

Embodiments of a twelfth aspect of the present disclosure provide a computer program, which when run on a computer, causes the computer to implement the method described in the first aspect, or caused the computer to implement the method described in the second aspect.

### BRIEF DESCRIPTION OF THE DRAWINGS

In order to provide a clearer explanation of the technical solution in embodiments of the present disclosure or in the background, the accompanying drawings required for use in embodiments of the present disclosure or in the background will be described below.
Fig. 1 is a schematic diagram of an architecture of a communication system provided in an embodiment of the present disclosure.
Fig. 2 is a schematic flowchart of a measurement method provided in an embodiment of the present disclosure.
Fig. 3 is a schematic flowchart of another measurement method provided in an embodiment of the present disclosure.
Fig. 4 is a schematic flowchart of another measurement method provided in an embodiment of the present disclosure.
Fig. 5 is a schematic flowchart of another measurement method provided in an embodiment of the present disclosure.
Fig. 6 is a schematic flowchart of another measurement method provided in an embodiment of the present disclosure.
Fig. 7 is a schematic flowchart of another measurement method provided in an embodiment of the present disclosure.
Fig. 8 is a first schematic diagram of beam pointing in embodiments of the present disclosure.
Fig. 9 is a second schematic diagram of beam pointing in embodiments of the present disclosure.
Fig. 10 is a schematic flowchart of another measurement method provided in an embodiment of the present disclosure.
Fig. 11 is a block diagram of a measurement device provided in an embodiment of the present disclosure.
Fig. 12 is a block diagram of another measurement device provided in an embodiment of the present disclosure.
Fig. 13 is a block diagram of a chip provided in an embodiment of the present disclosure.

### DETAILED DESCRIPTION

In order to better understand the measurement method disclosed in embodiments of the present disclosure, the following first describes the communication system applicable to embodiments of the present disclosure.

In order to clarify the purpose, technical solution, and advantages of this disclosure, a further detailed description of the embodiments of this disclosure will be provided below in conjunction with the accompanying drawings.

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the present disclosure. On the contrary, they are only examples of devices and methods consistent with some aspects of the present disclosure as described in the accompanying claims.

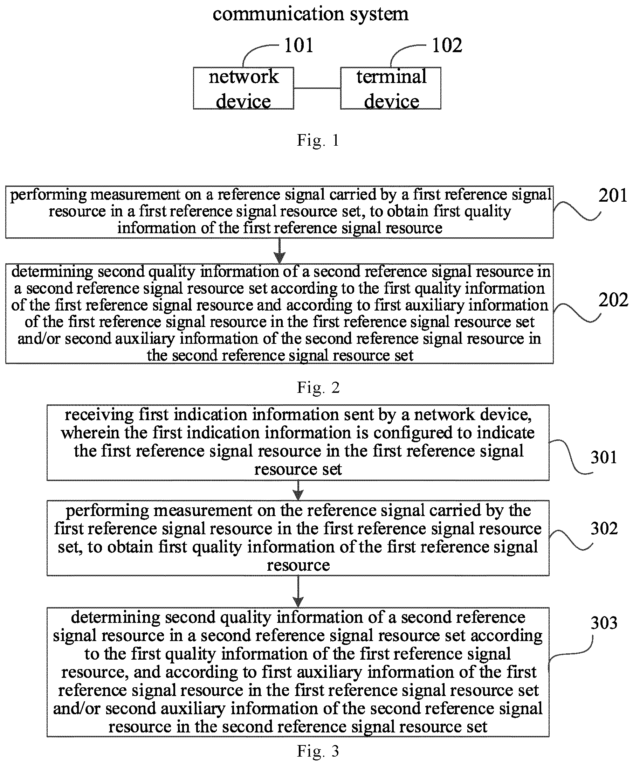

Please refer to Fig. 1, which is a schematic diagram of an architecture of a communication system provided in an embodiment of the present disclosure. The communication system may include, but is not limited to, one network device and one terminal device. The number and form of devices shown in Fig. 1 are for example only and do not constitute a limitation on embodiments of the present disclosure. In practical applications, the communication system may include two or more network devices and two or more terminal devices. The communication system shown in Fig. 1 is only an example that includes one network device 101 and one terminal device 102.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 101 in embodiments of the present disclosure is an entity used for transmitting or receiving signals on the network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and some or all of the remaining protocol layer functions distributed in the DUs, which are centrally controlled by the CU.

The terminal device 102 in embodiments of the present disclosure is an entity on the user side used for receiving or transmitting signals, such as a mobile phone. The terminal device can also be referred to as a terminal, user equipment (UE), mobile station (MS), mobile terminal (MT), etc. The terminal device may be a communication enabled car, smart car, mobile phone, wearable device, tablet (Pad), computer with wireless transmission and reception capabilities, virtual reality (VR) terminal device, augmented reality (AR) terminal device, wireless terminal device in industrial control, wireless terminal device in autonomous driving, wireless terminal device in remote medical surgery, wireless terminal device in smart grids, wireless terminal device in transportation safety, wireless terminal device in smart city, or wireless terminal device in smart home, etc. The specific technology and device form adopted by the terminal device is not limited in embodiments of the present disclosure.

In the above communication system, AI+PHY (physical layer) technology will be studied in Rel. 18, which applies AI technology to wireless network air interfaces. Beam management is an important application scenario of AI+PHY, and the application of AI technology can reduce the overhead and latency in spatial domain.

The purpose of beam selection based on AI technology is to:
a) reduce the number of beam pairs measured by the terminal device as much as possible to reduce the complexity of measurements performed by the terminal device;
b) reduce the number and quality of beams reported by the terminal device as much as possible to reduce the overhead of reporting by the terminal device;
c) reduce the number of beams sent by the network device as much as possible to reduce the overhead of the reference signal.

According to some existing simulation results, it has been found that AI recovery based on specific beam groups (such as uniformly selected beam groups) has better performance compared to AI recovery based on randomly selected beam groups. Here, AI recovery refers to recovering the quality information of beams in a large set based on the quality information of beams in a small set, such as recovering the quality information of 32 beams based on the quality information of 8 beams. Moreover, the selection of specific beam groups, that is, which beams are chosen to form the specific beam group, will also affect the performance of AI. For example, even with uniform sampling, if the position of the first beam pair is different, the difference in final results will still be significant.

Therefore, how to select the positions of multiple beams in the sampling and enable the terminal device to complete AI algorithms based on these beams is a problem that needs to be solved.

With respect to the above problems, the present disclosure provides a measurement method and device.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The measurement method and device provided in this disclosure will be described in detail with reference to the accompanying drawings.

Please refer to Fig. 2, which is a schematic flowchart of a measurement method provided in an embodiment of the present disclosure. The measurement method can be performed by the terminal device in the communication system shown in Fig. 1.

As shown in Fig. 2, the measurement method may include, but is not limited to following steps.

In step 201, measurement is performed on a reference signal carried by a first reference signal resource in a first reference signal resource set, to obtain first quality information of the first reference signal resource.

In embodiments of the present disclosure, the number of first reference signal resources included in the first reference signal resource set may be one or multiple, and is not limited in this disclosure. For example, the number of first reference signal resources may be 4, 6, 8, and so on.

In embodiments of the present disclosure, the reference signal carried by the first reference signal resource may include at least a channel state information reference signal (CSI-RS), or may also include other downlink reference signals, such as synchronous reference signals, which is not limited in this disclosure.

In embodiments of the present disclosure, the first quality information may include at least reference signal receiving power (RSRP) or signal to interference plus noise ratio (SINR).

In embodiments of the present disclosure, the terminal device can perform measurement on the reference signal carried by the first reference signal resource in the first reference signal resource set to obtain the first quality information of the first reference signal resource.

In step 202, second quality information of a second reference signal resource in a second reference signal resource set is determined according to the first reference signal resource, and according to first auxiliary information of the first reference signal resource in the first reference signal resource set and/or second auxiliary information of the second reference signal resource in the second reference signal resource set.

In embodiments of the present disclosure, the number of second reference signal resources included in the second reference signal resource set may be one or multiple, and is not limited in this disclosure. For example, the number of second reference signal resources may be 4, 6, 8, and so on.

In embodiments of the present disclosure, there is no limitation on the size relationship between the number of second reference signal resources and the number of first reference signal resources. For example, the number of second reference signal resources may be greater than the number of first reference signal resources, or the number of second reference signal resources may be less than or equal to the number of first reference signal resources, which is not limited in embodiments of the present disclosure.

In embodiments of the present disclosure, the first auxiliary information may include at least beam pointing information of the first reference signal resource in the first reference signal resource set.

In embodiments of the present disclosure, the second auxiliary information may include at least: beam pointing information corresponding to the second reference signal resource set, and/or the number of second reference signal resources.

In embodiments of the present disclosure, the second quality information may include at least RSRP or SINR. Here, the second quality information may be the same as the first quality information, or the second quality information may be different from the first quality information, which is not limited in embodiments of the present disclosure. For example, both the second quality information and the first quality information may be RSRP, or both the second quality information and the first quality information may be SINR, or the second quality information may be RSRP and the first quality information may be SINR, or the second quality information may be SINR and the first quality information may be RSRP.

In embodiments of the present disclosure, the terminal device may determine the second quality information of the second reference signal resource in the second reference signal resource set based on the first quality information of the first reference information resource, and according to the first auxiliary information of the first reference signal resource in the first reference signal resource set and/or the second auxiliary information of the second reference signal resource in the second reference signal resource set.

As an example, the terminal device may determine the second quality information of the second reference signal resource in the second reference signal resource set according to the first quality information of the first reference signal resource and according to the first auxiliary information of the first reference signal resource in the first reference signal resource set.

As another example, the terminal device may determine the second quality information of the second reference signal resource in the second reference signal resource set according to the first quality information of the first reference signal resource and according to the second auxiliary information of the second reference signal resource in the second reference signal resource set.

As yet another example, the terminal device may determine the second quality information of the second reference signal resource in the second reference signal resource set based on the first quality information of the first reference information resource, and according to the first auxiliary information of the first reference signal resource in the first reference signal resource set and the second auxiliary information of the second reference signal resource in the second reference signal resource set.

As a possible implementation, the terminal device can use AI algorithms to determine the second quality information of each second reference signal resource in the second reference signal resource set based on the first quality information of each first reference information resource in the first reference signal resource set, as well as the first auxiliary information and/or the second auxiliary information. For example, the terminal device can use AI models to determine the second quality information of each second reference signal resource in the second reference signal resource set based on the first quality information, as well as the first auxiliary information and/or the second auxiliary information.

In the measurement method of embodiments of the present disclosure, the reference signal carried by the first reference signal resource in the first reference signal resource set is measured by the terminal device, to obtain the first quality information of the first reference signal resource, and the second quality information of the second reference signal resource in the second reference signal resource set is determined based on the first quality information of the first reference signal resource and according to the first auxiliary information of the first reference signal resource in the first reference signal resource set and/or the second auxiliary information of the second reference signal resource in the second reference signal resource set. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

Please refer to Fig. 3, which is a schematic flowchart of another measurement method provided in an embodiment of the present disclosure. The measurement method can be performed by the terminal device in the communication system shown in Fig. 1. The measurement method can be performed separately, or combined with any of the embodiments disclosed in this disclosure or possible implementations in the embodiments, or combined with any technical solution in related technologies.

As shown in Fig. 3, the measurement method may include, but is not limited to, following steps.

In step 301, first indication information sent by a network device is received. The first indication information is configured to indicate the first reference signal resource in the first reference signal resource set.

In embodiments of the present disclosure, each first reference signal resource in the first reference signal resource set can be indicated by the network device, that is, the network device can send first indication information to the terminal device, which is used to indicate each first reference signal resource in the first reference signal resource set.

In step 302, measurement is performed on the reference signal carried by the first reference signal resource in the first reference signal resource set, to obtain the first quality information of the first reference signal resource.

In step 303, second quality information of the second reference signal resource in the second reference signal resource set is determined according to the first quality information of the first reference signal resource, and according to the first auxiliary information of the first reference signal resource in the first reference signal resource set and/or the second auxiliary information of the second reference signal resource in the second reference signal resource set.

In embodiments of the present disclosure, steps 302 to 303 can be implemented using any of the methods described in embodiments of the present disclosure, which is not limited in embodiments of the present disclosure, and will not be elaborated.

With the measurement method of embodiments of the present disclosure, the first reference signal resource in the first reference signal resource set is indicated by the network device, so that the terminal device can measure the reference signal carried by the indicated first reference signal resource, to obtain the first quality information of the first reference signal resource, and determine the second quality information of the second reference signal resource in the second reference signal resource set based on the first quality information of the first reference signal resource in the first reference signal resource set and according to the first auxiliary information of the first reference signal resource in the first reference signal resource set and/or the second auxiliary information of the second reference signal resource in the second reference signal resource set. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

It should be noted that the above possible implementations can be executed separately or combined together, which is not limited in embodiments of the present disclosure.

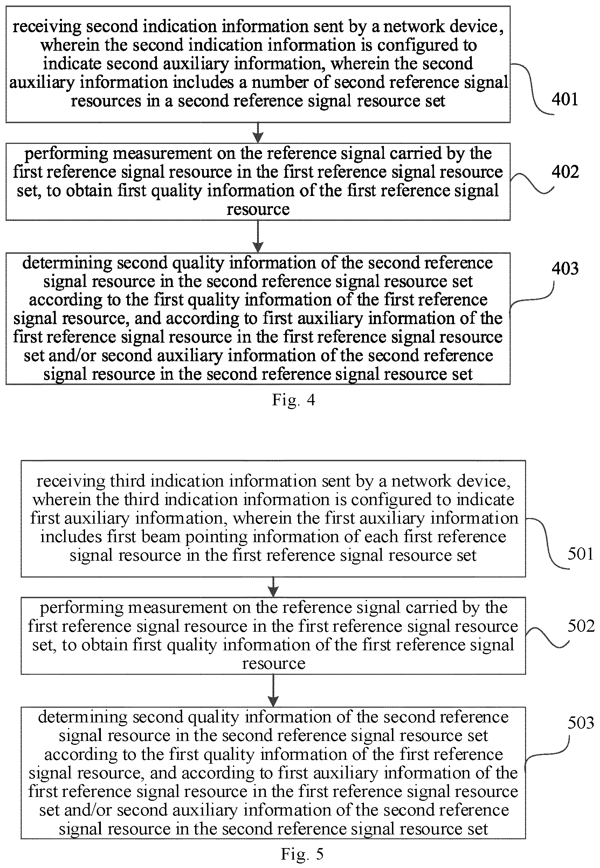

Please refer to Fig. 4, which is a schematic flowchart of another measurement method provided by an embodiment of the present disclosure. The measurement method can be performed by the terminal device in the communication system shown in Fig. 1. The measurement method can be performed separately, or combined with any of the embodiments disclosed in this disclosure or possible implementations in the embodiments, or combined with any technical solution in related technologies.

As shown in Fig. 4, the measurement method may include, but is not limited to following steps.

In step 401, second indication information sent by a network device is received. The second indication information is configured to indicate the second auxiliary information, wherein the second auxiliary information includes a number of second reference signal resourced contained in the second reference signal resource set.

In embodiments of the present disclosure, the second auxiliary information of the second reference signal resource set can be indicated by the network device, that is, the network device can send the second indication information to the terminal device, which is used to indicate the second auxiliary information. The second auxiliary information may include the number of second reference signal resources contained in the second reference signal resource set.

As a possible implementation, the number of second reference signal resources can be determined by the network device according to a rule. The rule may be a predefined rule.

As an example, the network device can determine the number of second reference signal resources according to the predefined rule and/or AI model.

For example, the predefined rule may be: the number of second reference signal resources is a set multiple of the number of first reference signal resources. Assuming the above set multiple is 4 and the number of first reference signal resources is x, then the number of second reference signal resources is x * 4.

For another example, the predefined rule may be: the number of second reference signal resources is set to be a constant value, such as Y.

For another example, the correspondence between different AI models and resource quantities can be preset. In this disclosure, the correspondence relationship can be queried based on the AI model actually used by the terminal device, and the resource quantity corresponding to the AI model can be determined as the number of the second reference signal resource. For example, if the AI model is A, the number of second reference signal resources is z, and if the AI model is B, the number of second reference signal resources is y.

The AI model actually used by the terminal device may be indicated to the terminal device by the network device, or may be selected by the terminal device itself, which is not limited in embodiments of the present disclosure. When the AI model is indicated by the network device to the terminal device, the network device can send indication information to the terminal device, which is referred to as fifth indication information in this disclosure. The fifth indication information may include the index of the AI model, which is used to indicate which AI model the terminal device chooses.

It should be noted that the above example only uses separate indication information (i.e. the fifth indication information) from the network device to indicate the AI model. In practical applications, the index of the AI model can also be embedded into an existing indication information (such as the first indication information, the second indication information, etc.), which is not limited in embodiments of the present disclosure.

For another example, different correspondences/criteria between the number of first reference signal resources, AI models, and the number of second reference signal resources can be established in advance. In this disclosure, after determining the number of first reference signal resources included in the first reference signal resource set and the AI model actually used by the terminal device, the above correspondences/criteria can be queried to determine the number of second reference signal resources corresponding to the number of first reference signal resources included in the first reference signal resource set and the AI model actually used by the terminal device.

As a possible implementation, the second indication information can be carried at least in radio resource control (RRC) signaling.

As an example, the RRC signaling can directly carry the number of second reference signal resources.

As another example, the RRC signaling can carry a scaling factor, where the scaling factor is the ratio of the number of second reference signal resources to the number of first reference signal resources.

For example, the number of second reference signal resources is a set multiple of the number of first reference signal resources, wherein the set multiple is the ratio coefficient. If the number of first reference signal resources is marked as x, the number of second reference signal resources is y, and the scaling factor is K, then y=K * x. The value of K can be indicated through RRC signaling, or the value of y can be indicated through RRC signaling.

In step 402, measurement is performed on the reference signal carried by the first reference signal resource in the first reference signal resource set, to obtain the first quality information of the first reference signal resource.

It should be noted that, the execution timing of steps 401 and 402 is not limited in this disclosure. Fig. 4 only provides an example of step 401 being executed before step 402. In practical applications, step 401 can also be executed in parallel with step 402, or step 401 can be executed after step 402, which is not limited.

In step 403, the second quality information of the second reference signal resource in the second reference signal resource set is determined according to the first quality information of the first reference signal resource, and according to the first auxiliary information of the first reference signal resource in the first reference signal resource set and/or the second auxiliary information of the second reference signal resource in the second reference signal resource set.

In embodiments of the present disclosure, steps 402 to 403 can be implemented using any of the methods described in embodiments of the present disclosure, which is not limited in embodiments of the present disclosure and will not be elaborated.

With the measurement method in this embodiment of the present disclosure, the second auxiliary information of the second reference signal resource in the second reference signal resource set is indicated by the network device, so that the terminal device can measure the reference signal carried by the first reference signal resource, obtain the first quality information of the first reference signal resource, and determine the second quality information of the second reference signal resource in the second reference signal resource set based on the first quality information of the first reference signal resource in the first reference signal resource set and based on the first auxiliary information of the first reference signal resource in the first reference signal resource set and/or the second auxiliary information indicated by the network device. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

It should be noted that, the above possible implementations can be executed separately or combined together, which is not limited in embodiments of the present disclosure.

Please refer to Fig. 5, which is a schematic flowchart of another measurement method provided by an embodiment of the present disclosure. The measurement method can be performed by the terminal device in the communication system shown in Fig. 1. The measurement method can be performed separately, or combined with any of the embodiments disclosed in this disclosure or possible implementations in the embodiments, or combined with any technical solution in related technologies.

As shown in Fig. 5, the measurement method may include, but is not limited to following steps.

In step 501, third indication information sent by a network device is received. The third indication information is configured to indicate the first auxiliary information, wherein the first auxiliary information includes first beam pointing information of each first reference signal resource in the first reference signal resource set.

In embodiments of the present disclosure, the first auxiliary information of the first reference signal resource set may be indicated by the network device, that is, the network device may send the third indication information to the terminal device, which is used to indicate the first auxiliary information. The first auxiliary information may include the first beam pointing information of each first reference signal resource in the first reference signal resource set.

As a possible implementation, the first beam pointing information may include horizontal direction pointing information and vertical direction pointing information.

As an example, the first beam pointing information of the first reference signal resource can be explicitly sent by the network device, for example, the horizontal direction pointing information in the first beam pointing information can be ϕ1, and the vertical direction pointing information can be θ 1.

As a possible implementation, the first beam pointing information may also include beam width information, where the beam width information may include but is not limited to half power beam width, half power angle, 3dB beam width, etc. The 3dB beam width may include horizontal 3dB wave width, vertical 3dB wave width, etc.

As a possible implementation, the third indication information can be carried in the reference signal configuration information (RS configuration) corresponding to the first reference signal resource.

That is, in this disclosure, for each first reference signal resource, the first reference signal resource may have a corresponding RS configuration, in which the first beam pointing information corresponding to the first reference signal resource may be configured. After receiving the RS configuration sent by the network device, the terminal device can determine the first beam pointing information of the first reference signal resource.

As a possible implementation, the third indication information can also be sent separately from the RS configuration. For example, the third indication information can be indicated by at least one or a combination of the following signaling: RRC signaling; media access control control element (MAC CE) signaling; downlink control information (DCI) signaling.

For example, the beam pointing information corresponding to the activated reference signal (RS) can be indicated in the MAC CE signaling.

As a possible implementation, the third indication information may include the index of the reference signal carried by the first reference signal resource, wherein the index of the reference signal has a correspondence relationship with beam pointing.

As an example, the correspondence between beam pointing and the index of the reference signal can be predefined. Therefore, in this disclosure, after determining the index of the reference signal carried by the first reference signal resource based on the third indication information sent by the network device, the terminal device can query the above correspondence based on the index of the reference signal, determine the beam pointing corresponding to the index of the reference signal carried by the first reference signal resource, and use it as the first beam pointing information of the first reference signal resource.

For example, each reference signal can be encoded based on the horizontal beam pointing range [ϕ1, ϕ2, ϕ3, ϕ4] and the vertical beam pointing range [θ1, θ2]] to obtain the beam pointing information corresponding to the index of each reference signal. For example, the beam pointing information corresponding to the reference signal with index 1 is [ϕ1, θ1]. Therefore, the correspondence between the index of the reference signal and the beam pointing can be established based on the index and beam pointing information of the reference signal.

As a possible implementation, the third indication information may include a quasi co-location relationship between the first beam pointing information of the first reference signal resource and the target reference signal with known beam pointing information.

For example, for each first reference signal resource, the first beam pointing information of the first reference signal resource can be indicated by performing Quasi Co-Location (QCL) with a target reference signal that has known beam pointing information. Here, the beam pointing information of the target reference signal can be determined by any of the above methods, or can also be determined by other methods, which is not limited in embodiments of the present disclosure.

In step 502, measurement is performed on the reference signal carried by the first reference signal resource in the first reference signal resource set, to obtain the first quality information of the first reference signal resource.

It should be noted that, the execution timing of steps 501 and 502 is not limited in this disclosure. Fig. 5 only provides an example of step 501 being executed before step 502. In practical applications, step 501 can also be executed in parallel with step 502, or step 501 can be executed after step 502, which is not limited.

In step 503, the second quality information of the second reference signal resource in the second reference signal resource set is determined according to the first quality information of the first reference signal resource, and according to the first auxiliary information of the first reference signal resource in the first reference signal resource set and/or the second auxiliary information of the second reference signal resource in the second reference signal resource set.

In embodiments of the present disclosure, steps 502 to 503 can be implemented using any of the methods described in embodiments of the present disclosure, which is not limited in embodiments of the present disclosure and will not be elaborated.

With the measurement method in this embodiment of the present disclosure, the first auxiliary information of the first reference signal resource in the first reference signal resource set is indicated by the network device, so that the terminal device can measure the reference signal carried by the first reference signal resource, obtain the first quality information of the first reference signal resource, and determine the second quality information of the second reference signal resource in the second reference signal resource set based on the first quality information of the first reference signal resource and based on the second auxiliary information of the second reference signal resource in the second reference signal resource set and/or the first auxiliary information indicated by the network device. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

It should be noted that, the above possible implementations can be executed separately or combined together, which is not limited in embodiments of the present disclosure.

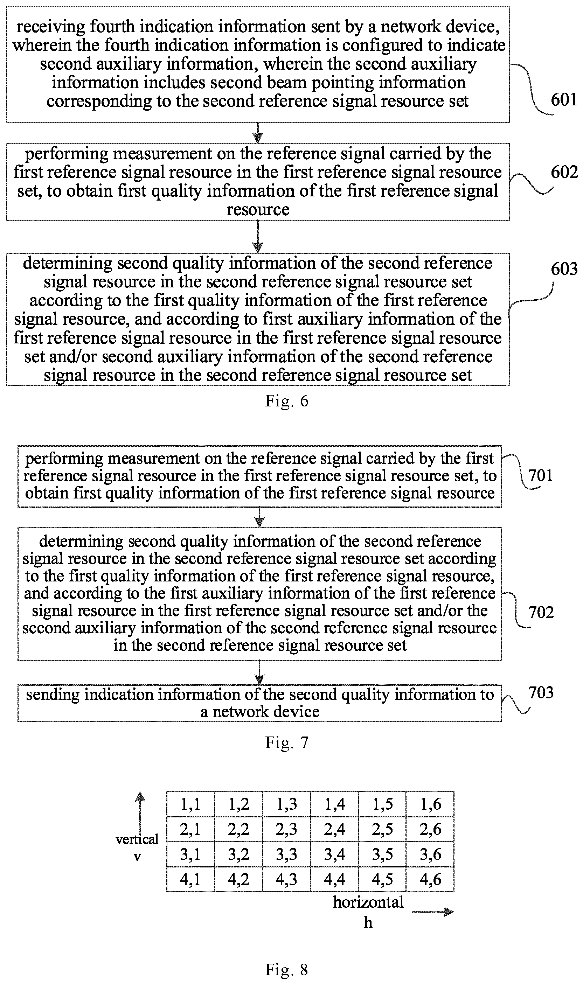

Please refer to Fig. 6, which is a schematic flowchart of another measurement method provided by an embodiment of the present disclosure. The measurement method can be performed by the terminal device in the communication system shown in Fig. 1. The measurement method can be performed separately, or combined with any of the embodiments disclosed in this disclosure or possible implementations in the embodiments, or combined with any technical solution in related technologies.

As shown in Fig. 6, the measurement method may include, but is not limited to following steps.

In step 601, fourth indication information sent by a network device is received. The fourth indication information is configured to indicate the second auxiliary information, wherein the second auxiliary information includes second beam pointing information corresponding to the second reference signal resource set.

In embodiments of the present disclosure, the second auxiliary information of the second reference signal resource set can be indicated by the network device, that is, the network device can send the fourth indication information to the terminal device, which is used to indicate the second auxiliary information. The second auxiliary information may include the second beam pointing information corresponding to the second reference signal resource set.

As a possible implementation, the second beam pointing information may include a beam pointing information range in a horizontal direction and a beam pointing information range in a vertical direction.

As an example, the second beam pointing information may be explicitly sent by the network device. For example, in the second beam pointing information, the beam pointing information range in the horizontal direction may be [ϕ 1, ϕ 2, ϕ 3, ϕ 4], and the beam pointing information range in the vertical direction may be [θ 1, θ 2].

As a possible implementation, the second beam pointing information may further include beam width information. The beam width information may include but is not limited to half power beam width, half power angle, 3dB beam width, etc. The 3dB beam width may include horizontal 3dB beam width, vertical 3dB beam width, etc.

As a possible implementation, the second beam pointing information is determined by the network device according to the number of second reference signal resources.

As an example, the network device may determine the second beam pointing information corresponding to the second reference signal resource set according to the AI model and the number of second reference signal resources.

For example, the correspondence/criteria between different AI models, resource quantities and beam pointing information can be preset. In this disclosure, the network device can query the above correspondence/criteria to determine the beam pointing information corresponding to the used AI model and the number of second reference signal resource, and use the beam pointing information as the second beam pointing information.

As a possible implementation, the second beam pointing information can be obtained by the network device querying the correspondence relationship between the number of resources and the beam pointing based on the number of second reference signal resources.

As an example, the correspondence between beam pointing and resource quantity can be predefined. For example, if the resource quantity is 8, the beam pointing information range in the horizontal direction is [ϕ1, ϕ2, ϕ3, ϕ4], and the beam pointing information range in the vertical direction is [θ 1, θ 2], and for example, if the resource quantity is 24, the beam pointing information range in the horizontal direction is [ϕ1, ϕ2, ϕ3, ϕ4,ϕ5,ϕ6], and the beam pointing information range in the vertical direction is [ θ 1, θ 2, θ 3, θ 4].

Therefore, in this disclosure, the network device can query the correspondence between the number of resources and beam pointing based on the number of second reference signal resources, and determine the second beam pointing information corresponding to the number of second reference signal resources.

As a possible implementation, the fourth indication information may include the number of resources, wherein the number of resources has a correspondence relationship with the beam pointing.

As an example, the network device can send the correspondence relationship between resource quantity and beam pointing to the terminal device in advance. For example, the network device can configure the above correspondence relationship through RRC signaling, such as configuring the above correspondence relationship through RRC table, i.e. RRCtable. Therefore, in this disclosure, after receiving the fourth indication information containing the number of resources (i.e. the number of second reference signal resources), the terminal device can query the correspondence relationship based on the number of resources, determine the beam pointing information corresponding to the number of resources, and use it as the second beam pointing information.

It should be noted that, the correspondence between the number of resources and beam pointing can also be agreed upon through a protocol, which is not limited in embodiments of the present disclosure.

As another example, the fourth indication information may include both the correspondence between the number of resources and beam pointing, as well as the number of resources (i.e., the number of second reference signal resources). Therefore, in this disclosure, after receiving the fourth indication information, the terminal device can query the correspondence between the number of resources and beam pointing based on the number of second reference signal resources, determine the beam pointing information corresponding to the number of second reference signal resources, and use it as the second beam pointing information.

As a possible implementation, the fourth indication information may be indicated by at least one or a combination of the following signaling: RRC signaling; MAC CE signaling; DCI signaling.

In step 602, measurement is performed on the reference signal carried by the first reference signal resource in the first reference signal resource set, to obtain the first quality information of the first reference signal resource.

It should be noted that, the execution timing of steps 601 and 602 is not limited in this disclosure. Fig. 6 only provides an example of step 601 being executed before step 602. In practical applications, step 601 can also be executed in parallel with step 602, or step 601 can be executed after step 602, which is not limited.

In step 603, the second quality information of the second reference signal resource in the second reference signal resource set is determined according to the first quality information of the first reference signal resource, and according to the first auxiliary information of the first reference signal resource in the first reference signal resource set and/or the second auxiliary information of the second reference signal resource in the second reference signal resource set.

In embodiments of the present disclosure, steps 602 to 603 can be implemented using any of the methods described in embodiments of the present disclosure, which is not limited in embodiments of the present disclosure and will not be elaborated.

With the measurement method in this embodiment of the present disclosure, the second auxiliary information of the second reference signal resource in the second reference signal resource set is indicated by the network device, so that the terminal device can measure the reference signal carried by the first reference signal resource, obtain the first quality information of the first reference signal resource, and determine the second quality information of the second reference signal resource in the second reference signal resource set based on the first quality information of the first reference signal resource and based on the first auxiliary information of the first reference signal resource in the first reference signal resource set and/or the second auxiliary information indicated by the network device. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

It should be noted that, the above possible implementations can be executed separately or combined together, which is not limited in embodiments of the present disclosure.

Please refer to Fig. 7, which is a schematic flowchart of another measurement method provided by an embodiment of the present disclosure. The measurement method can be performed by the terminal device in the communication system shown in Fig. 1. The measurement method can be performed separately, or combined with any of the embodiments disclosed in this disclosure or possible implementations in the embodiments, or combined with any technical solution in related technologies.

As shown in Fig. 7, the measurement method may include, but is not limited to following steps.

In step 701, measurement is performed on a reference signal carried by a first reference signal resource in a first reference signal resource set, to obtain first quality information of the first reference signal resource.

In step 702, second quality information of a second reference signal resource in a second reference signal resource set is determined according to the first quality information of the first reference signal resource, and according to first auxiliary information of the first reference signal resource in the first reference signal resource set and second auxiliary information of the second reference signal resource in the second reference signal resource set.

In embodiments of the present disclosure, steps 701 to 702 can be implemented using any of the methods described in embodiments of the present disclosure, which is not limited in embodiments of the present disclosure and will not be elaborated.

In step 703, indication information of the second quality information is sent to a network device.

The indication information of the second quality information includes identification of at least one target reference signal resource determined from respective second reference signal resources based on the second quality information of each second reference signal resource; and/or, the second quality information of the at least one target reference signal resource.

In embodiments of the present disclosure, when the number of target reference signal resources is one, the terminal device can determine the target reference signal resource with the highest second quality information from respective second reference signal resources based on the second quality information of each second reference signal resource, and can then send the identification (such as ID) of the target reference signal resource and/or the second quality information of the target reference signal resource to the network device.

In embodiments of the present disclosure, when the number of target reference signal resources is multiple, such as a set number of target reference signal resources, the terminal device can sort respective second reference signal resources according to the value of the second quality information from high to low, select the first set number of second reference signal resources as the target reference signal resources, and send the identification of each target reference signal resource and/or the second quality information of each target reference signal resource to the network device.

In a possible implementation of the present disclosure, when the number of target reference signal resources is multiple, the indication information of the second quality information sent to the network device may include not only the identification of each target reference signal resource, but also the second quality information of the target reference signal resource ranked first, and the differential information of the target reference signal resource ranked non first, which may be the differential information of the second quality information between the target reference signal resource ranked non first and the target reference signal resource ranked before it.

In the measurement method of embodiments of the present disclosure, the indication information of second quality information is sent to the network device, wherein the indication information of second quality information includes identification of at least one target reference signal resource determined from respective second reference signal resources based on the second quality information of each second reference signal resource; and/or, second quality information of the at least one target reference signal resource. Thus, it is possible for the terminal device to report the identification and/or second quality information of the second reference signal resource in the second reference signal resource set to the network device.

It should be noted that, the above possible implementations can be executed separately or combined together, which is not limited in embodiments of the present disclosure.

In any of the embodiments disclosed herein, when the beam widths of the first reference signal resource in the first reference signal resource set and the second reference signal resource in the second reference signal resource set are the same, the network device may indicate to the terminal device the number of second reference signal resources included in the second reference signal resource set (e.g. 24). The network device can also send the first reference signal resource in the first reference signal resource set to the terminal device, and indicate the first beam pointing information of the first reference signal resource in the first reference signal resource set to the terminal device. For example, when the number of first reference signal resources is 6, the first beam pointing information can be (1,1), (2,2), (3,3), (3,4), (3,5), and (4,6) as shown in Fig. 8.

In Fig. 8, there are 6 angles in the horizontal direction and 4 angles in the vertical direction to form the beam pointing.

The terminal device measures each first reference signal resource in the first reference signal resource set, obtains the RSRP of each first reference signal resource in the first reference signal resource set, and predicts the RSRP of 24 second reference signal resources in the second reference signal resource set based on the measured 6 RSRPs, such as the RSRP of 24 CSI-RS resources with beam pointing from (1,1) to (4,6) in Fig. 8.

The terminal device can select the sequence number (CRI (CSI-RS resource indicator, channel state information reference signal resource identifier)=10) of the optimal reference signal resource with beam pointing (2, 4) based on the RSRP of each second reference signal resource in the second reference signal resource set, and report the sequence number CRI=10 to the network device.

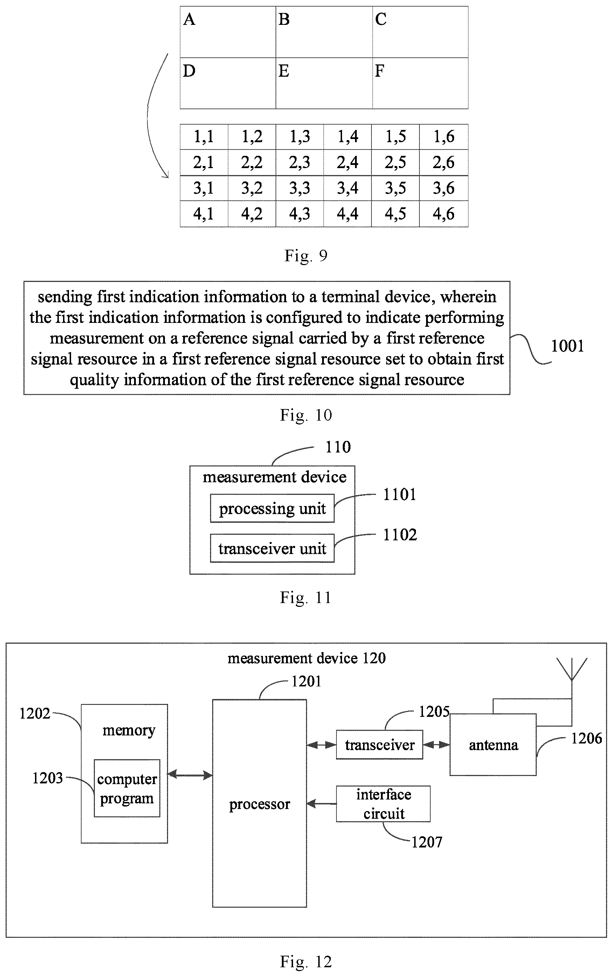

In any embodiment of the present disclosure, when the beam widths of the first reference signal resource in the first reference signal resource set and the second reference signal resource in the second reference signal resource set are inconsistent, the network device may indicate to the terminal device the number and beam width (e.g. 10 °) of the second reference signal resources included in the second reference signal resource set. The network device can also send the first reference signal resource in the first reference signal resource set to the terminal device, and indicate the first beam pointing information and beam width (such as 20 °) of the first reference signal resource in the first reference signal resource set to the terminal device. For example, the first beam pointing information can be shown as ABCDEF in Fig. 9.

After measuring the RSRP of the first reference signal resource in the first reference signal resource set, the terminal device can predict the RSRPs of 24 second reference signal resources in the second reference signal resource set based on the measured 6 RSRPs, such as the RSRPs of 24 CSI-RS resources with beam pointing from (1,1) to (4,6) in Fig. 9.

The terminal device can select the sequence number (CRI=10) of the optimal reference signal resource with beam pointing (2, 4) based on the RSRP of the second reference signal resource in the second reference signal resource set, and report the sequence number CRI=10 to the network device.

In any embodiment of the present disclosure, a CSI reporting configuration is associated with a CSI resource configuration and an AI model, wherein the AI model may include the number of second reference signal resources included in the second reference signal resource set and the first beam pointing information of the first reference signal resource in the first reference signal resource set.

In any embodiment of the present disclosure, a CSI reporting configuration is associated with a CSI resource configuration, wherein the CSI resource configuration may include the index and first beam pointing information of the first reference signal resource in the first reference signal resource set, and implicitly include the number of first reference signal resources contained in the first reference signal resource set; the CSI reporting configuration may include the number of second reference signal resources included in the second reference signal resource set, as well as the second beam pointing information.

In any embodiment of the present disclosure, a CSI reporting configuration is associated with a CSI resource configuration, wherein the CSI resource configuration may include the index and first beam pointing information of the first reference signal resource in the first reference signal resource set, and implicitly include the number of first reference signal resources contained in the first reference signal resource set.

Each CSI reporting configuration in the CSI-AperiodicTriggerStateList and/or the CSI-SemiPersistentOnPUSCH-TriggerStateList on the Physical Uplink Shared Channel (PUSCH) is associated with an AI model, where the AI model may include the rule for determining the number of second reference signal resources included in the second reference signal resource set.

The above information can be reflected in RRC signaling of CSI reporting configuration and/or CSI resource configuration and/or AI configuration, as well as in MAC CE signaling and/or DCI signaling.

Please refer to Fig. 10, which is a schematic flowchart of another measurement method provided in an embodiment of the present disclosure. The measurement method can be performed by the network device in the communication system shown in Fig. 1.

As shown in Fig. 10, the measurement method may include, but is not limited to following steps.

In step 1001, first indication information is sent to a terminal device. The first indication information is configured to indicate performing measurement on a reference signal carried by a first reference signal resource in a first reference signal resource set, to obtain first quality information of the first reference signal resource.

The first quality information of the first reference signal resource is used together with first auxiliary information of the first reference signal resource in the first reference signal resource set and/or second auxiliary information of a second reference signal resource in a second reference signal resource set to determine second quality information of the second reference signal resource in the second reference signal resource set.

In a possible implementation of embodiments of the present disclosure, the reference signal carried by the first reference signal resource at least includes a CSI-RS.

In a possible implementation of embodiments of the present disclosure, the network device may send second indication information to the terminal device, wherein the second indication information is configured to indicate the second auxiliary information, wherein the second auxiliary information includes a number of second reference signal resources in the second reference signal resource set.

In a possible implementation of embodiments of the present disclosure, the number of second reference signal resources is determined by a rule.

In a possible implementation of embodiments of the present disclosure, the second indication information is at least carried in an RRC signaling.

In a possible implementation of embodiments of the present disclosure, the network device may send third indication information to the terminal device, wherein the third indication information is configured to indicate the first auxiliary information, wherein the first auxiliary information includes first beam pointing information of each first reference signal resource in the first reference signal resource set.

In a possible implementation of embodiments of the present disclosure, the third indication information is indicated by at least one or a combination of following signaling: RRC signaling; MAC CE signaling; and DCI signaling.

In a possible implementation of embodiments of the present disclosure, the third indication information includes an index of the reference signal, and wherein the index of the reference signal has a correspondence relationship with beam pointing.

In a possible implementation of embodiments of the present disclosure, the third indication information includes a quasi co-location relationship between the first beam pointing information of the first reference signal resource and a target reference signal with known beam pointing information.

In a possible implementation of embodiments of the present disclosure, the first beam pointing information includes horizontal beam pointing information and vertical beam pointing information.

In a possible implementation of embodiments of the present disclosure, the first beam pointing information further includes beam width information, wherein the beam width information includes at least one of half power beam width, half power angle, and 3dB beam width.

In a possible implementation of embodiments of the present disclosure, the network device may send fourth indication information to the terminal device, wherein the fourth indication information is configured to indicate the second auxiliary information, and wherein the second auxiliary information includes second beam pointing information corresponding to the second reference signal resource set.

In a possible implementation of embodiments of the present disclosure, the fourth indication information is indicated by at least one or a combination of following signaling: RRC signaling; MAC CE signaling; and DCI signaling.

In a possible implementation of embodiments of the present disclosure, the second beam pointing information is determined according to a number of second reference signal resources.

In a possible implementation of embodiments of the present disclosure, the second beam pointing information is determined by querying a correspondence relationship between resource number and beam pointing according to a number of second reference signaling resources.

In a possible implementation of embodiments of the present disclosure, the fourth indication information includes a resource number, wherein the resource number has a correspondence relationship with beam pointing.

In a possible implementation of embodiments of the present disclosure, the second beam pointing information includes a beam pointing information range in a horizontal direction and a beam pointing information range in a vertical direction.

In a possible implementation of embodiments of the present disclosure, the second beam pointing information further include beam width information, wherein the beam width information includes at least one of half power beam width, half power angle, and 3dB beam width.

In a possible implementation of embodiments of the present disclosure, the first quality information and/or the second quality information at least include SINR or RSRP.

In a possible implementation of embodiments of the present disclosure, the network device may further receive indication information of the second quality information sent by the terminal device; wherein the indication information of the second quality information includes: identification of at least one target reference signal resource determined from respective second reference signal resources according to the second quality information of each second reference signal resource; and/or second quality information of the at least one target reference signal resource.

It should be noted that the explanation of the measurement method performed by the terminal device in any of the above embodiments also applies to the measurement method performed by the network device, and its implementation principle is similar, so it will not be repeated here.

In the measurement method of embodiments of the present disclosure, the first indication information is sent by the network device to the terminal device. The first indication information is used to indicate the measurement of the reference signal carried by the first reference signal resource in the first reference signal resource set, in order to obtain the first quality information of the first reference signal resource. Here, the first quality information of the first reference signal resource is used to determine the second quality information of the second reference signal resource in the second reference signal resource set based on the first auxiliary information of the first reference signal resource in the first reference signal resource set and/or the second auxiliary information of the second reference signal resource in the second reference signal resource set. Therefore, the terminal device does not need to measure each second reference signal resource in the second reference signal resource set, and can obtain the second quality information of each second reference signal resource. That is, the terminal device can recover the second quality information of each second reference signal resource in the second reference signal resource set based on the first quality information of each first reference signal resource in the first reference signal resource set obtained from the measurement, which can reduce the complexity of measurement performed by the terminal device.

It should be noted that the above possible implementations can be executed separately or combined together, which is not limited in embodiments of the present disclosure.

In the embodiments provided in the present disclosure, the methods provided in the present disclosure are introduced from the perspectives of terminal device and network device. In order to achieve the various functions in the methods provided in the embodiments of the present disclosure, the terminal device and network device may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to Fig. 11, which is a block diagram of a measurement device 110 provided in an embodiment of the present disclosure. The measurement device 110 shown in Fig. 11 may include a processing unit 1101 and a transceiver unit 1102. The transceiver unit 1102 may include a sending unit and/or a receiving unit. The sending unit is used to implement the sending function, the receiving unit is used to implement the receiving function, and the transceiver unit can implement the sending and/or receiving functions.

The measurement device 110 may be a terminal device, a device within a terminal device, or a device that can be used in conjunction with the terminal device. Alternatively, the measurement device 110 may be a network device, a device within a network device, or a device that can be used in conjunction with the network device.

When the measurement device 110 is the terminal device, the processing unit 1101 is used to measure the reference signal carried by the first reference signal resource in the first reference signal resource set, to obtain the first quality information of the first reference signal resource, and determine the second quality information of the second reference signal resource in the second reference signal resource set based on the first quality information of the first reference signal resource in the first reference signal resource set and based on the first auxiliary information of the first reference signal resource in the first reference signal resource set and/or the second auxiliary information of the second reference signal resource in the second reference signal resource set.

In some embodiments, the transceiver unit 1102 is configured to receive first indication information sent by a network device, wherein the first indication information is configured to indicate the first reference signal resource in the first reference signal resource set.

In some embodiments, the reference signal carried by the first reference signal resource at least includes a channel state information reference signal (CSI-RS).

In some embodiments, the transceiver unit 1102 is further configured to receive second indication information sent by a network device, wherein the second indication information is configured to indicate the second auxiliary information, wherein the second auxiliary information includes a number of second reference signal resources in the second reference signal resource set.

In some embodiments, the second indication information is at least carried in RRC signaling.

In some embodiment, the transceiver unit 1102 is further configured to receive third indication information sent by a network device, wherein the third indication information is configured to indicate the first auxiliary information, wherein the first auxiliary information includes first beam pointing information of each first reference signal resource in the first reference signal resource set.

In some embodiments, the third indication information is indicated by at least one or a combination of following signaling: RRC signaling; MAC CE signaling; and DCI signaling.

In some embodiments, the third indication information includes an index of the reference signal, wherein the index of the reference signal has a correspondence relationship with beam pointing.

In some embodiments, the third indication information includes a quasi co-location relationship between the first beam pointing information of the first reference signal resource and a target reference signal with known beam pointing information.

In some embodiments, the first beam pointing information includes horizontal direction pointing information and vertical direction pointing information.

In some embodiments, the first beam pointing information further includes beam width information, wherein the beam width information comprises at least one of half power beam width, half power angle, and 3dB beam width.

In some embodiments, the transceiver unit 1102 is further configured to receive fourth indication information sent by a network device, wherein the fourth indication information is configured to indicate the second auxiliary information, and wherein the second auxiliary information includes second beam pointing information corresponding to the second reference signal resource set.

In some embodiments, the fourth indication information is indicated by at least one or a combination of following signaling: RRC signaling; MAC CE signaling; and DCI signaling.

In some embodiments, the fourth indication information includes a resource number, wherein the resource number has a correspondence relationship with beam pointing.

In some embodiments, the second beam pointing information includes a beam pointing information range in a horizontal direction and a beam pointing information range in a vertical direction.

In some embodiments, the second beam pointing information further includes beam width information, wherein the beam width information includes at least one of half power beam width, half power angle, and 3dB beam width.

In some embodiments, the first quality information and/or the second quality information at least include SINR or RSRP.

In some embodiments, the transceiver unit 1102 is further configured to send indication information of the second quality information to a network device; wherein the indication information of the second quality information includes: identification of at least one target reference signal resource determined from respective second reference signal resources according to the second quality information of each second reference signal resource; and/or second quality information of the at least one target reference signal resource.

When the measuring device 110 is the network device: the transceiver unit 1102 is configured to send the first indication information to the terminal device, wherein the first indication information is configured to indicate the measurement of the reference signal carried by the first reference signal resource in the first reference signal resource set to obtain the first quality information of the first reference signal resource; wherein, the first quality information of the first reference signal resource is used to determine the second quality information of the second reference signal resource in the second reference signal resource set based on the first auxiliary information of the first reference signal resource in the first reference signal resource set and/or the second auxiliary information of the second reference signal resource in the second reference signal resource set.

In some embodiments, the reference signal carried by the first reference signal resource at least includes a CSI-RS.

In some embodiments, the transceiver unit 1102 is further configured to send second indication information to the terminal device, wherein the second indication information is configured to indicate the second auxiliary information, wherein the second auxiliary information includes a number of second reference signal resources in the second reference signal resource set.

In some embodiments, the number of second reference signal resources is determined by a rule.

In some embodiments, the second indication information is at least carried in an RRC signaling.

In some embodiments, the transceiver unit 1102 is further configured to send third indication information to the terminal device, wherein the third indication information is configured to indicate the first auxiliary information, wherein the first auxiliary information includes first beam pointing information of each first reference signal resource in the first reference signal resource set.

In some embodiments, the third indication information is indicated by at least one or a combination of following signaling: RRC signaling; MAC CE signaling; and DCI signaling.

In some embodiments, the third indication information includes an index of the reference signal, wherein the index of the reference signal has a correspondence relationship with beam pointing.

In some embodiments, the third indication information includes a quasi co-location relationship between the first beam pointing information of the first reference signal resource and a target reference signal with known beam pointing information.

In some embodiments, the first beam pointing information includes horizontal beam pointing information and vertical beam pointing information.

In some embodiments, the first beam pointing information further includes beam width information, wherein the beam width information includes at least one of half power beam width, half power angle, and 3dB beam width.

In some embodiments, the transceiver unit 1102 is further configured to send fourth indication information to the terminal device, wherein the fourth indication information is configured to indicate the second auxiliary information, and wherein the second auxiliary information includes second beam pointing information corresponding to the second reference signal resource set.

In some embodiments, the fourth indication information is indicated by at least one or a combination of following signaling: RRC signaling; MAC CE signaling; and DCI signaling.

In some embodiments, the second beam pointing information is determined according to a number of second reference signal resources.

In some embodiments, the second beam pointing information is determined by querying a correspondence relationship between resource number and beam pointing according to a number of second reference signaling resources.

In some embodiments, the fourth indication information includes a resource number, wherein the resource number has a correspondence relationship with beam pointing.

In some embodiments, the second beam pointing information includes a beam pointing information range in a horizontal direction and a beam pointing information range in a vertical direction.

In some embodiments, the second beam pointing information further includes beam width information, wherein the beam width information includes at least one of half power beam width, half power angle, and 3dB beam width.

In some embodiments, the first quality information and/or the second quality information at least include SINR or RSRP.

In some embodiments, the transceiver unit 1102 is further configured to receive indication information of the second quality information sent by the terminal device; wherein the indication information of the second quality information includes: identification of at least one target reference signal resource determined from respective second reference signal resources according to the second quality information of each second reference signal resource; and/or second quality information of the at least one target reference signal resource.

It should be noted that the explanation of the method executed on the terminal device side in any of the embodiments shown in Figs. 2 to 7, or the explanation of the method executed on the network device side in the embodiment shown in Fig. 10, also applies to the measurement device 110 of this embodiment. The implementation principle is similar and will not be repeated here.

Please refer to Fig. 12, which is a block diagram of another measurement device provided in an embodiment of the present disclosure. The measurement device 120 may be a terminal device or a network device, or may be a chip, chip system, or processor that supports the terminal device or the network device to implement the above methods. This device can be used to implement the methods described in the above method embodiments, which can be referred to in the description of the above method embodiments.

The measurement device 120 may include one or more processors 1201. The processor 1201 may be a general-purpose processor or a dedicated processor, etc. For example, it may be a baseband processor or a central processor. The baseband processor can be used to process communication protocols and communication data, while the central processor can be used to control the measurement device (such as base stations, baseband chips, terminal devices, terminal device chips, DU or CU, etc.), execute computer programs, and process data from computer programs.

Optionally, the measurement device 120 may further include one or more memories 1202, on which computer program 1203 may be stored. The processor 1201 executes the computer program 1203 to enable the measurement device 120 to perform the methods described in the above method embodiments. The computer program 1203 may be solidified in the processor 1201, in which case the processor 1201 may be implemented by hardware.

Optionally, data can also be stored in the memory 1202. The measurement device 120 and the memory 1202 can be set separately or integrated together.

Optionally, the measurement device 120 may further include a transceiver 1205 and an antenna 1206. The transceiver 1205 can be referred to as a transceiver unit, transceiver machine, or transceiver circuit, etc., used to implement transceiver functions. The transceiver 1205 can include a receiver and a transmitter, where the receiver can be referred to as a receiver machine or receiver circuit, etc., used to implement the receiving function; the transmitter can be referred to as a transmitter machine or a transmission circuit, etc., used to implement the transmission function.

Optionally, the measurement device 120 may also include one or more interface circuits 1207. The interface circuit 1207 is used to receive code instructions and transmit them to the processor 1201. The processor 1201 executes the code instructions to cause the measurement device 120 to perform the method described in the above method embodiments.

The measurement device 120 is a terminal device, and the processor 1201 is used to execute any of the method embodiments shown in Figs. 2 to 7 of the present disclosure.

The measurement device 120 is a network device, and the processor 1201 is used to execute the method embodiment shown in Fig. 10 of the present disclosure.

It should be noted that the explanation of the measurement method in any of the embodiments shown in Figs. 2 to 10 also applies to the measurement device 120 of this embodiment, and its implementation principle is similar, so it will not be repeated here.

In an implementation, the processor 1201 may include a transceiver for implementing receiving and transmitting functions. For example, the transceiver may be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In an implementation, the measurement device 120 may include a circuit that can perform the functions of sending, receiving, or communication as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The measurement device described in the above embodiments may be a terminal device or a network device, but the scope of the measurement device described in this disclosure is not limited to this, and the structure of the measurement device may not be limited by Fig. 12. The measurement device may be an independent device or a part of a larger device. For example, the measurement device may be:
(1) independent integrated circuit IC, or chip, or chip system or subsystem;
(2) a set of one or more ICs, optionally including storage components for storing data and computer programs;
(3) ASIC, such as modems;
(4) modules that can be embedded in other devices;
(5) receiver, terminal device, intelligent terminal device, cellular phone, wireless device, handheld device, mobile unit, vehicle mounted device, network device, cloud device, artificial intelligence device, etc;
(6) others and so on.

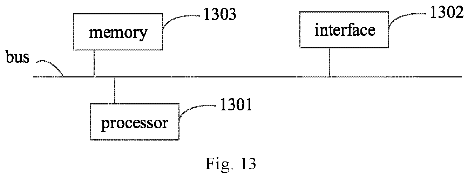

For the case where the measurement device may be a chip or a chip system, please refer to the schematic block diagram of the chip shown in Fig. 13. The chip shown in Fig. 13 includes a processor 1301 and an interface 1302. The number of processors 1301 may be one or more, and the number of interfaces 1302 may be multiple.

For the case where the chip is used to implement the functions of the terminal device in embodiments of the present disclosure:
the interface 1302 is configured to receive code instructions and transmit the code instructions to the processor;
the processor 1301 is configured to run the code instructions to implement the method shown in any embodiment of Figs. 2-7.

For the case where the chip is used to implement the functions of the network device in embodiments of the present disclosure:
the interface 1302 is configured to receive code instructions and transmit the code instructions to the processor;
the processor 1301 is configured to run the code instructions to implement the method shown in the embodiment of Fig. 10.

Optionally, the chip further includes a memory 1303. The memory 1303 is configured to store necessary computer program and data.

It should be noted that, the explanation of the measurement method in any of the embodiments shown in Figs. 2 to 10 also applies to the chip of this embodiment, and its implementation principle is similar, so it will not be repeated here.

Those skilled in the art can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Those skilled in the art can use various methods to implement functions for each specific application, but such implementation should not be understood as exceeding the scope of protection of embodiments of the present disclosure.

Embodiments of the present disclosure further provide a communication system, which includes a measurement device as a terminal device or network device in the aforementioned embodiment of Fig. 12, or the system includes a measurement device as a terminal device or network device in the aforementioned embodiment of Fig. 13.

The present disclosure further provides a readable storage medium storing instructions that, when executed by a computer, implement the functions of any of the method embodiments described above.

The present disclosure further provides a computer program product that, when executed by a computer, implements the functions of any of the method embodiments described above.

In the above embodiments, all or part of it can be implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available medium. The available medium can be magnetic medium (such as floppy disks, hard disks, magnetic tapes), optical medium (such as high-density digital video discs (DVDs)), or semiconductor medium (such as solid state disks (SSDs)).

Ordinary technical personnel in this field can understand that various numerical numbers mentioned in this disclosure, such as first and second, are only for the convenience of description and are not intended to limit the scope of embodiments of the present disclosure, but also indicate the order.

"At least one" in embodiments of the present disclosure can also be described as one or more, and "more" can be two, three, four, or more, without limitation in this disclosure. In embodiments of the present disclosure, for a type of technical feature, the technical features in this type of technical feature are distinguished by "first", "second", "third", "A", "B", "C", and "D", etc. The technical features described by "first", "second", "third", "A", "B", "C", and "D" have no order of priority or size.

It can be understood that "multiple" in this disclosure refers to two or more, and other quantifiers are similar to it. 'And/or' describes the association relationship between related objects, indicating that there can be three types of relationships, for example, A and/or B, which can represent: A exists alone, A and B exist simultaneously, and B exists alone. The character '/' generally indicates that the associated object before and after is an 'or' relationship. The singular forms of 'one', 'said', and 'this' are also intended to include the majority form, unless the context clearly indicates otherwise.

The word 'if' used here can be interpreted as 'when' or 'in case' or 'in response to determining'.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The names of the parameters shown by the titles in each table can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The "predefined" in this disclosure can be understood as defined, defined in advance, stored, pre-stored, pre-negotiated, pre-configured, solidified, or pre-fired.

Those skilled in the art will recognize that the units and algorithm steps described in conjunction with the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of the description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A measurement method, performed by a terminal device, comprising:
performing measurement on a reference signal carried by a first reference signal resource in a first reference signal resource set, to obtain first quality information of the first reference signal resource; and
determining second quality information of a second reference signal resource in a second reference signal resource set according to the first quality information of the first reference signal resource and according to first auxiliary information of the first reference signal resource in the first reference signal resource set and/or second auxiliary information of the second reference signal resource in the second reference signal resource set.

2. The method of claim 1, further comprising:
receiving first indication information sent by a network device, wherein the first indication information is configured to indicate the first reference signal resource in the first reference signal resource set.

3. The method of claim 1 or 2, wherein the reference signal carried by the first reference signal resource at least comprises a channel state information reference signal (CSI-RS).

4. The method of any of claims 1-3, further comprising:
receiving second indication information sent by a network device, wherein the second indication information is configured to indicate the second auxiliary information, wherein the second auxiliary information comprises a number of second reference signal resources in the second reference signal resource set.

5. The method of claim 4, wherein the second indication information is at least carried in a radio resource control (RRC) signaling.

6. The method of any of claims 1-3, further comprising:
receiving third indication information sent by a network device, wherein the third indication information is configured to indicate the first auxiliary information, wherein the first auxiliary information comprises first beam pointing information of each first reference signal resource in the first reference signal resource set.

7. The method of claim 6, wherein the third indication information is indicated by at least one or a combination of following signaling:
a radio resource control (RRC) signaling;
a media access control control element (MAC CE) signaling; or
a downlink control information (DCI) signaling.

8. The method of claim 6, wherein the third indication information comprises an index of the reference signal, and wherein the index of the reference signal has a correspondence relationship with beam pointing.

9. The method of claim 6, wherein the third indication information comprises a quasi co-location relationship between the first beam pointing information of the first reference signal resource and a target reference signal with known beam pointing information.

10. The method of any of claims 6-9, wherein the first beam pointing information comprises horizontal direction pointing information and vertical direction pointing information.

11. The method of any of claims 6-10, wherein the first beam pointing information further comprises beam width information, and wherein the beam width information comprises at least one of half power beam width, half power angle, and 3dB beam width.

12. The method of any of claims 1-3, further comprising:
receiving fourth indication information sent by a network device, wherein the fourth indication information is configured to indicate the second auxiliary information, and wherein the second auxiliary information comprises second beam pointing information corresponding to the second reference signal resource set.

13. The method of claim 12, wherein the fourth indication information is indicated by at least one or a combination of following signaling:
a radio resource control (RRC) signaling;
a media access control control element (MAC CE) signaling; or
a downlink control information (DCI) signaling.

14. The method of claim 12, wherein the fourth indication information comprises a resource number, and wherein the resource number has a correspondence relationship with beam pointing.

15. The method of any of claims 12-14, wherein the second beam pointing information comprises a beam pointing information range in a horizontal direction and a beam pointing information range in a vertical direction.

16. The method of any of claims 1-15, further comprising:
sending indication information of the second quality information to a network device;
wherein the indication information of the second quality information comprises:
identification of at least one target reference signal resource determined from respective second reference signal resources according to the second quality information of each second reference signal resource; and/or second quality information of the at least one target reference signal resource.

17. A measurement method, performed by a network device, comprising:
sending first indication information to a terminal device, wherein the first indication information is configured to indicate performing measurement on a reference signal carried by a first reference signal resource in a first reference signal resource set to obtain first quality information of the first reference signal resource;
wherein the first quality information of the first reference signal resource is used together with first auxiliary information of the first reference signal resource in the first reference signal resource set and/or second auxiliary information of a second reference signal resource in a second reference signal resource set to determine second quality information of the second reference signal resource in the second reference signal resource set.

18. The method of claim 17, wherein the reference signal carried by the first reference signal resource at least comprises a channel state information reference signal (CSI-RS).

19. The method of claim 17 or 18, further comprising:
sending second indication information to the terminal device, wherein the second indication information is configured to indicate the second auxiliary information, wherein the second auxiliary information comprises a number of second reference signal resources in the second reference signal resource set.

20. The method of claim 19, wherein the number of second reference signal resources is determined by a rule.

21. The method of claim 19, wherein the second indication information is at least carried in a radio resource control (RRC) signaling.

22. The method of claim 17 or 18, further comprising:
sending third indication information to the terminal device, wherein the third indication information is configured to indicate the first auxiliary information, wherein the first auxiliary information comprises first beam pointing information of each first reference signal resource in the first reference signal resource set.

23. The method of claim 22, wherein the third indication information is indicated by at least one or a combination of following signaling:
a radio resource control (RRC) signaling;
a media access control control element (MAC CE) signaling; and
a downlink control information (DCI) signaling.

24. The method of claim 22, wherein the third indication information comprises an index of the reference signal, and wherein the index of the reference signal has a correspondence relationship with beam pointing.

25. The method of claim 22, wherein the third indication information comprises a quasi co-location relationship between the first beam pointing information of the first reference signal resource and a target reference signal with known beam pointing information.

26. The method of any of claims 22-25, wherein the first beam pointing information comprises horizontal beam pointing information and vertical beam pointing information.

27. The method of any of claims 22-26, wherein the first beam pointing information further comprises beam width information, and wherein the beam width information comprises at least one of half power beam width, half power angle, and 3dB beam width.

28. The method of claim 17 or 18, further comprising:
sending fourth indication information to the terminal device, wherein the fourth indication information is configured to indicate the second auxiliary information, and wherein the second auxiliary information comprises second beam pointing information corresponding to the second reference signal resource set.

29. The method of claim 28, wherein the fourth indication information is indicated by at least one or a combination of following signaling:
a radio resource control (RRC) signaling;
a media access control control element (MAC CE) signaling; and
a downlink control information (DCI) signaling.

30. The method of claim 28, wherein the second beam pointing information is determined according to a number of second reference signal resources.

31. The method of claim 28, wherein the second beam pointing information is determined by querying a correspondence relationship between resource number and beam pointing according to a number of second reference signaling resources.

32. The method of claim 28, wherein the fourth indication information comprises a resource number, and wherein the resource number has a correspondence relationship with beam pointing.

33. The method of any of claims 28-32, wherein the second beam pointing information comprises a beam pointing information range in a horizontal direction and a beam pointing information range in a vertical direction.

34. The method of any of claims 17-33, further comprising:
receiving indication information of the second quality information sent by the terminal device;
wherein the indication information of the second quality information comprises:
identification of at least one target reference signal resource determined from respective second reference signal resources according to the second quality information of each second reference signal resource; and/or second quality information of the at least one target reference signal resource.

35. A measurement device, applied in a terminal device, comprising:
a processing unit, configured to perform measurement on a reference signal carried by a first reference signal resource in a first reference signal resource set, to obtain first quality information of the first reference signal resource; and determine second quality information of a second reference signal resource in a second reference signal resource set according to the first quality information of the first reference signal resource and according to first auxiliary information of the first reference signal resource in the first reference signal resource set and/or second auxiliary information of the second reference signal resource in the second reference signal resource set.

36. A measurement device, applied in a network device, comprising:
a transceiver unit, configured to send first indication information to a terminal device, wherein the first indication information is configured to indicate performing measurement on a reference signal carried by a first reference signal resource in a first reference signal resource set to obtain first quality information of the first reference signal resource;
wherein the first quality information of the first reference signal resource is used together with first auxiliary information of the first reference signal resource in the first reference signal resource set and/or second auxiliary information of a second reference signal resource in a second reference signal resource set to determine second quality information of the second reference signal resource in the second reference signal resource set.

37. A measurement device, comprising a processor and a memory, wherein the memory stores a computer program, which when executed by the processor, implements the method of any of claims 1-16, or implements the method of any of claims 17-34.

38. A measurement device, comprising a processor and an interface circuit, wherein
the interface circuit is configured to receive code instructions and transmit the code instructions to the processor;
the processor is configured to run the code instructions to implement the method of any of claims 1-16, or implement the method of any of claims 17-34.

39. A computer readable storage medium, configured to store instructions, which when executed, cause the method of any of claims 1-16 to be implemented, or cause the method of any of claims 14-34 to be implemented.
